# EUROPEAN PATENT APPLICATION

(11) **EP 3 136 334 A1**
(43) Date of publication of application: **01.03.2017**
(21) Application number: 16185886.5
(22) Date of filing: 26.08.2016
(51) Int. Cl.: G06Q 30/02, G06Q 30/06

(54) **SYSTEM AND APPARATUS FOR DISPLAYING CONTENT BASED ON LOCATION**

(30) Priority: 27.08.2015 US 201562210597 P
(71) Applicant: Vakilian, Mohammad Asian, Toronto, Ontario M4W 1P7 (CA); Vakilian, Hassan, Toronto, Ontario M4W 1P7 (CA)
(72) Inventor: Vakilian, Mohammad Asian, Toronto, Ontario M4W 1P7 (CA); Vakilian, Hassan, Toronto, Ontario M4W 1P7 (CA)
(74) Representative: Studio Torta S.p.A.

(57) **Abstract**

There is provided a method of creating a virtual bazaar comprising: receiving at a bazaar generation engine information packages each corresponding to one of a plurality of physical shops dispersed within a given geographical area; communicating the information packages from the engine to a shop information database and storing the information packages therein; receiving at the engine a selection of a location, and in response at the engine: retrieving from the database the information packages corresponding to a selection of the physical shops located within a target area related to the location selection, the target area within the given geographical area; generating for each physical shop in the selection a respective virtual representation based on the corresponding information package; and arranging the virtual representations to generate the bazaar so that the virtual representations of the physical shops providing each given offering are grouped in a respective portion of the bazaar.

## Description

### CROSS-REFERENCE TO RELATED APPLICATION

This application claims the benefit of U.S. Provisional Application No. 62/210,597, filed August 27, 2015, the contents of which are incorporated herein by reference in its entirety.

### FIELD

The present specification is directed to display of content, and more particularly to a system and method for displaying content based on location and relating to a category of product and/or service. In one aspect, the content is a graphical (i.e. virtual) representation of a bazaar.

### BACKGROUND

Computers have been used to generate digital virtual environments. Some of these environments are imagined and are thus unconnected to the physical world. For example, virtual environments such as SimCity™ and Second Life™ are primarily imagined and may not exactly correspond to the physical world. As such, these imagined virtual environments cannot be reliably used to inform or direct behavior in the physical world.

In contrast, other virtual environments are exact replicas of the physical world. For example, Google™ Street View corresponds exactly to the physical world. These virtual replicas present information in exactly the same way as it is presented in the physical world; e.g. the relative position and distribution of objects in Street View are exactly the same and tied to the corresponding objects in the physical world. These virtual replicas, however, fail to disconnect their virtual representations from the physical world to allow them to manipulate and refine their virtual representations to provide added value and increased usefulness to users.

### SUMMARY

It is an aspect of the present invention to provide a system and method for displaying content that overcomes disadvantages in the prior art.

The above aspects can be attained by a method of creating a virtual bazaar, the method comprising receiving at a bazaar generation engine information packages each corresponding to one of a plurality of physical shops dispersed within a given geographical area; communicating the information packages from the bazaar generation engine to a shop information database; and storing the information packages in the shop information database. The method also comprises receiving at the bazaar generation engine a location selection of a location, and in response to receiving the location selection, at the bazaar generation engine: retrieving from the shop information database the information packages corresponding to a selection of the physical shops located within a target area related to the location selection, the target area within the given geographical area; generating a respective virtual representation for each physical shop in the selection of the physical shops, each virtual representation based on the corresponding information package; and arranging the virtual representations to generate the virtual bazaar, the virtual representations arranged so that the virtual representations of the physical shops providing each given offering are grouped in a respective portion of the virtual bazaar.

According to another aspect of the present invention, there is provided a device for creating a virtual bazaar, the device comprising: a bazaar generation engine comprising a processor in communication with a network interface; and a shop information database in communication with the processor. The processor is configured to: receive information packages each corresponding to one of a plurality of physical shops dispersed within a given geographical area; communicate the information packages to the shop information database to store the information packages. The processor is also configured to receive a location selection of a location, and in response to receiving the location selection: retrieve from the shop information database the information packages corresponding to a selection of the physical shops located within a target area related to the location selection, the target area within the given geographical area; generate a respective virtual representation for each physical shop in the selection of the physical shops, each virtual representation based on the corresponding information package; and arrange the virtual representations to generate the virtual bazaar, the virtual representations arranged so that the virtual representations of the physical shops providing each given offering are grouped in a respective portion of the virtual bazaar.

These together with other aspects and advantages which will be subsequently apparent, reside in the details of construction and operation as more fully hereinafter described and claimed, reference being had to the accompanying drawings forming a part hereof, wherein like numerals refer to like parts throughout.

### BRIEF DESCRIPTION OF THE DRAWINGS

Exemplary implementations of the invention will now be described in accordance with the drawings in which:
Figure 1 is a block diagram showing collection of information for the generation of content according to an aspect of the present invention.
Figure 2 is a block diagram of a system for displaying content according to the present invention.
Figure 3 is a flowchart showing a method for displaying content according to the present invention.
Figure 4 is an exemplary display of content generated according to the system and method of the present invention.
Figure 5 shows a schematic representation of an exemplary system for generating and accessing a virtual bazaar.
Figure 6 shows a screenshot of an exemplary landing webpage providing access to a virtual bazaar.
Figure 7 shows a lane of an exemplary virtual bazaar.
Figure 8 shows a different perspective of the lane of Figure 7.
Figure 9 shows a virtual storefront of the lane of Figure 7.
Figure 10 shows a lane of an exemplary virtual bazaar.
Figure 11 shows a virtual storefront of a lane of an exemplary virtual bazaar.

### DETAILED DESCRIPTION

As discussed in greater detail below, a system and method are provided for displaying content based on location and relating to a category of product and/or service. In one aspect, the content is a graphical (i.e. virtual) representation of a bazaar for collectively advertising products and services of vendors providing similar products and services within a geographical area. Thus, according to one aspect vendors with different addresses and locations but of the same type are shown virtually side-by-side, in a designated "lane" of the bazaar.

The system and method of the invention are intended to provide an opportunity for small/medium businesses to acquire visibility through the Internet. Although the primary application of the invention is for displaying content, as discussed above, on-line shopping may also be facilitated through an optional link to each store's web site where on-line shopping and transactions can be performed separately from the content display system and method of the invention.

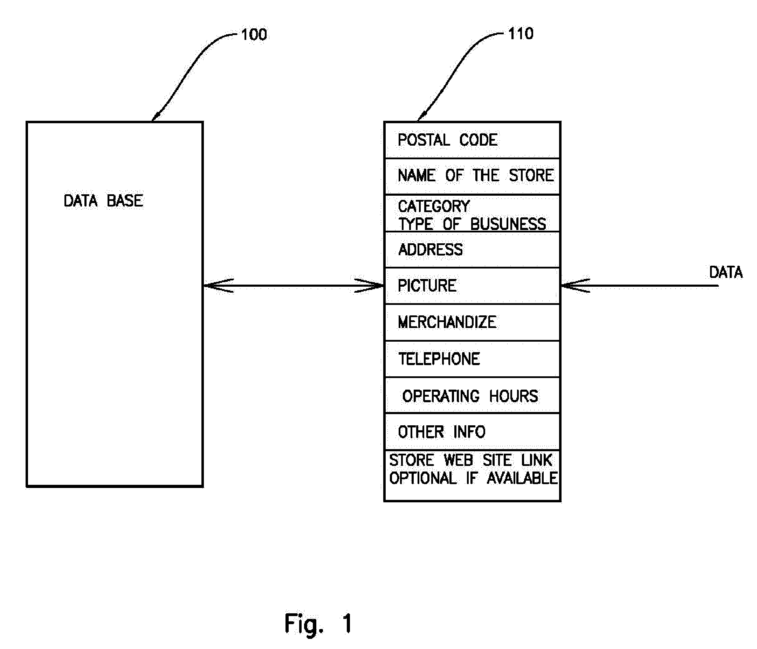

With reference to Fig. 1, a block diagram is provided of a system for collection of an information package 110 for the generation of content according to an aspect of the present invention. Data is gathered, for example manually through door-to-door visits to retailers and businesses, for collecting information such as a shop name; a shop image; a shop address; and a shop offering, and optionally one or more of a shop telephone number; a shop web site address; a shop operating hours; and a shop promotional offer information.

The shop offering can include one or more product types; one or more service types; one or more given products; and one or more given services. For example, a product type can include footwear, whereas a given product can include tennis shoes or hiking shoes. As another example, a service type can include beauty services, whereas a given service can include a hair salon or a nail salon.

Information package 110 can also include postal code and address of the store, name of the store (vendor), category of business, picture of storefront, type(s) of merchandise, telephone number, operating hours, vendor's web site URL (if available) and any other information. The information package 110 is loaded into a shop information database 100.

Other data collection means are possible, such as distributing flyers having a form to be completed and returned to the operator of the system, containing the data referred to above. The data for information package 110 can also be gathered by using a search and/or recognition engine to examine entries in digital business directories such as the Yellow Pages™. The search and/or recognition engine can also be used to examine entries in a visual, location-based database such as Google™ Street View to extract the data for information packages 110. The search and/or recognition engine can be a part of a bazaar generation engine. As discussed in greater detail below, the data is categorized in database 100 according to location, preferably using postal code, as well as category (i.e. type of business) in system's data base.

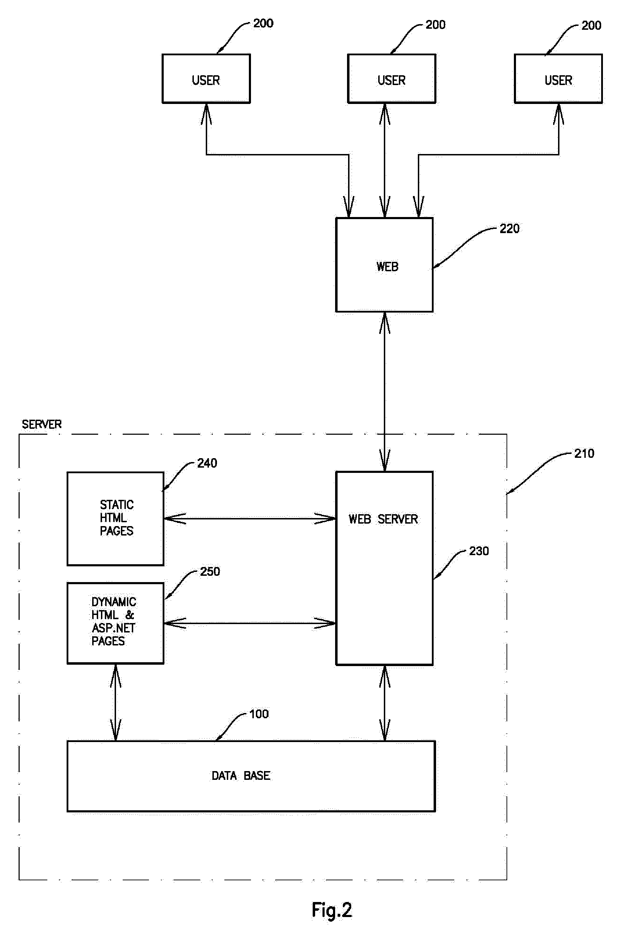

Turning to Fig. 2, a plurality of users 200 connect to a bazaar generation engine 210 through the Internet 220 for obtaining access to the information in database 100 and thereby virtually surf a web site for displaying content relating to the vendors from whom data has been collected. The users 200 may connect using laptop computers, mobile phones, tablets, etc. The bazaar generation engine 210 can be implemented as a stand-alone computer or leased from a data storage and/or cloud computing facility, as will be understood by a person of skill in the art, and can contain a web server 230 connected to database 100, for generating static HTML pages 240 and dynamic HTML and ASP.NET pages 250 displaying, for example, static advertisements similar to those seen in newspapers and dynamic banners similar to those seen on television.

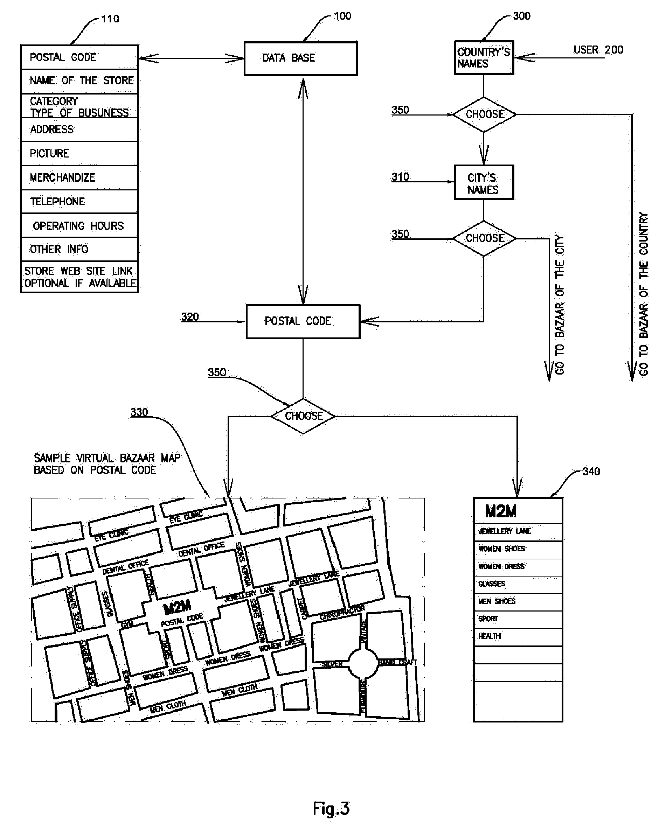

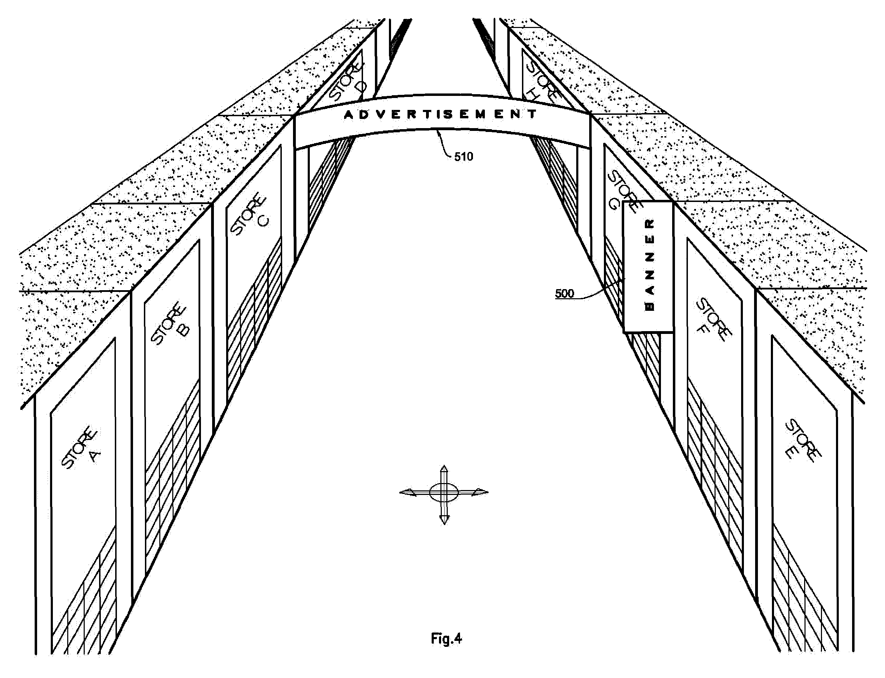

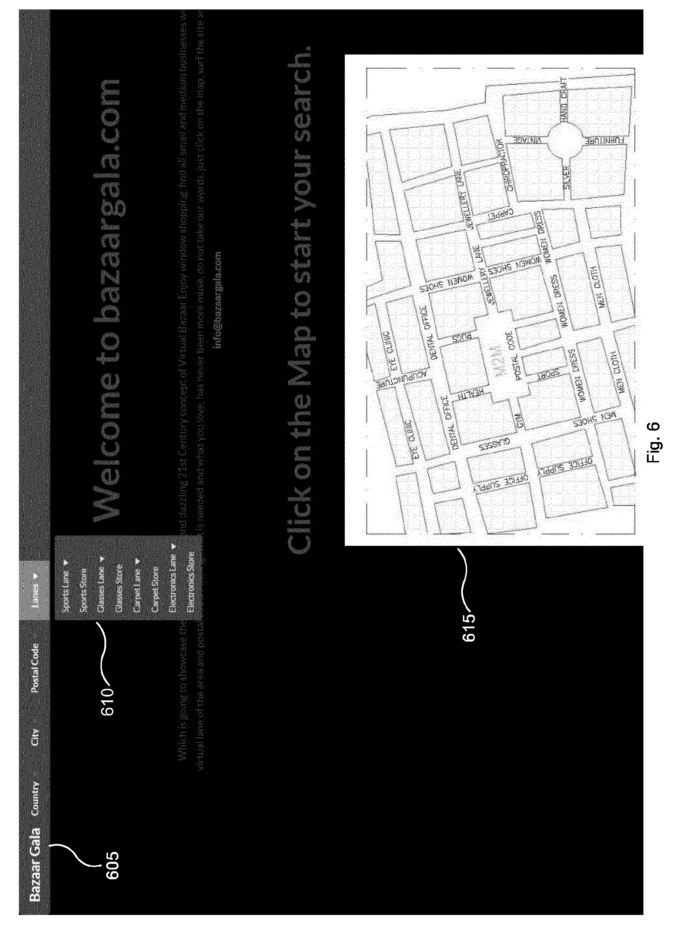

With reference to the flowchart in Fig. 3, a user 200 can connect to the bazaar generation engine 210 which in turn queries the user to input location information such as country 300, city 310 and postal code 320 in response to which a virtual bazaar map 330 and associated scroll-down menu 340 for the selected location can be generated and displayed at the user's device; see also Fig. 6, described in greater detail below. The user 200 can then choose to enter a specific "lane" of the bazaar relating to a category of product or service, such as jewelry, glasses, health, etc., by clicking on the map display 330 at an area of interest, or selecting from the menu 340. This results in generation of a navigable image of the selected lane, as shown in Fig. 4. In some implementations, the navigable image can be 2D or a combination of 2D and 3D.

Preferably, the location information includes at least one of an address; a street intersection; a landmark; a postal code; a zip code; a region; a city; a country; coordinates of a nearest cellular tower; coordinates of a nearest wireless access point; and latitude and longitude coordinates.

Optionally, the user 200 can expand the display to show a bazaar for an entire city or even entire country, as indicated by the "choose" steps 350.

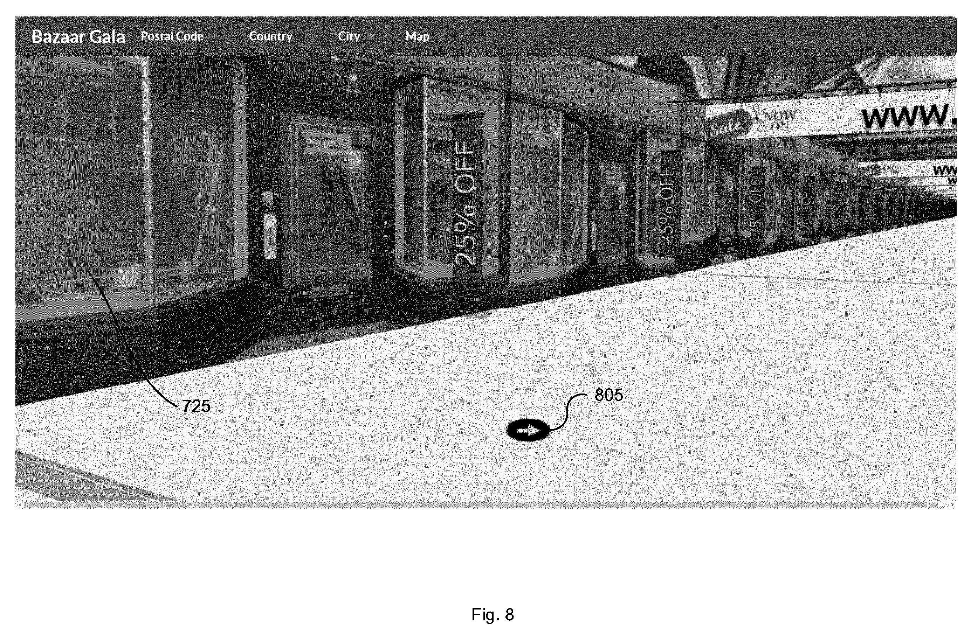

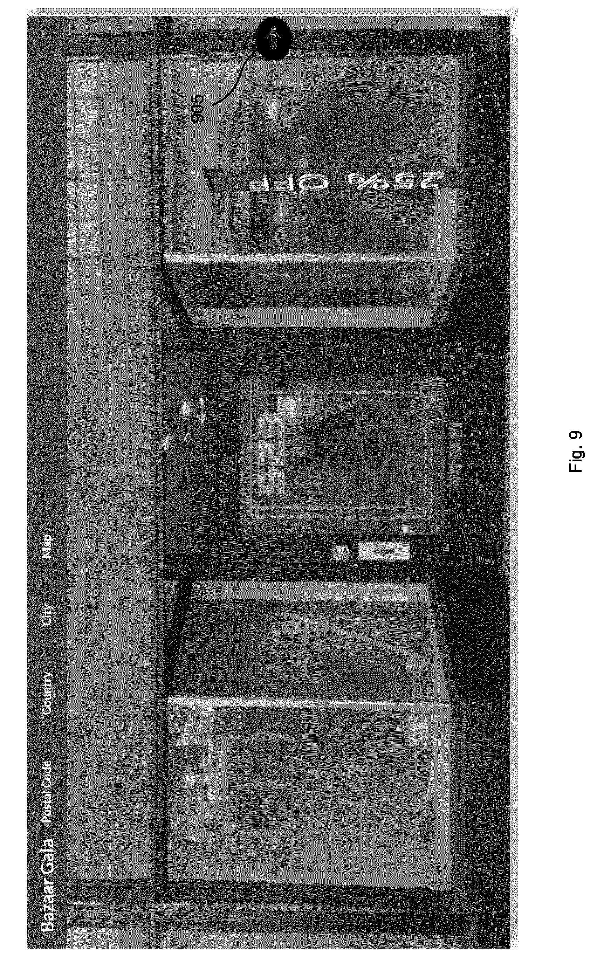

Returning to Fig. 4, an exemplary representation of a virtual bazaar is shown wherein all similar businesses (e.g. shoe stores) are arranged side-by-side in a single lane, irrespective of the actual geographical locations of the actual business/physical store. Information relating to each business, such as a photograph of the front window case, address, type of merchandize or service, contact information, and optional web site link can be displayed at a front entrance of the store. The display of Fig. 4 is preferably interactive such that the user 200 may virtually walk down the lane and view different stores, much in the same way that a user would 'window shop' in a bazaar or mall, with the important distinction that all vendors of a particular category of wares or services, at different addresses within a geographical area, are arranged together in at least one virtual lane of the bazaar. Preferably, the system includes real-time display generation permitting mouse or other input device actions to mimic the user 200 turning toward a virtual store to view the detailed information relating to the store; see e.g. Figs. 8 and 9. Then, if interested, the user 200 can take note of the information to facilitate a visit to the actual, physical store.

Optionally, if the vendor provides sufficient information (e.g. panoramic photographs) for loading into database 100, the system may permit a user 200 to virtually browse the interior of the store.

As shown in Fig. 4, vendors may opt to have the system also display a static banner 500, similar to a newspaper advertisement, or a dynamic banner 510, similar to television advertising, in order to highlight the vendor's store in the lane. Static banner 500 and dynamic banner 510 can also be used by commercial and industrial businesses to advertise their offerings. These commercial and industrial businesses may or may not have virtual representations or store fronts in the virtual bazaar.

Optionally, the system can stream music and can include day/night effects in the lanes, based on location and time of the entering to the site. The music sound track can correspond to a given offering corresponding to the at least one portion of the virtual bazaar.

Alternative implementations and variations are possible, such as receiving at the bazaar generation engine 210 an offering selection of a target offering; wherein the selection of the physical shops is further limited to the physical shops providing the target offering. For example, if the user specifies a location and "footwear" as the type of goods, then the virtual bazaar can include only representations of the stores that are located in the target area and offer footwear for sale.

It is also contemplated that one or more of the virtual representations further comprise a respective e-commerce link to allow purchasing the offering provided by the corresponding physical shop. In another aspect, the virtual representations are configured to allow virtual browsing of the offering provided by the corresponding physical shop.

In operation, an exemplary implementation of a method of creating the virtual bazaar can comprise receiving at bazaar generation engine 210 information packages 110 each corresponding to one of a plurality of physical shops dispersed within a given geographical area. The given geographical area can include, but is not limited to, a country, a city, or a region.

The method can further comprise communicating the information packages 110 from bazaar generation engine 210 to a shop information database 100, and storing information packages 110 in shop information database 100.

The method can further comprise receiving at bazaar generation engine 210 a location selection of a location. The location selection can be provided by one or more users 200 via the Internet 220. In response to receiving the location selection, the method can further comprise at bazaar generation engine 210 retrieving from shop information database 100 the information packages 110 corresponding to a selection of the physical shops located within a target area related to the location selection, the target area within the given geographical area.

For example, when the location selection comprises selection of a postal code, the target area related to the postal code comprises the physical area covered by that postal code. If the location selection comprises a pinpoint location, such as latitude and longitude coordinates or a landmark, then the target area related to that pinpoint location can comprise the area of a circle of a given radius centered at the pinpoint location. In addition to circles, other shapes can also be used, including but not limited to squares, polygons, and other curved shapes. If the physical area extends beyond the given geographical area, then the target area can be that portion of the physical area that is within the given geographical area. The selection of the physical shops can comprise all of or a subset of the physical shops located within the target area for which physical shops at least one information package 110 is stored in shop information database 100.

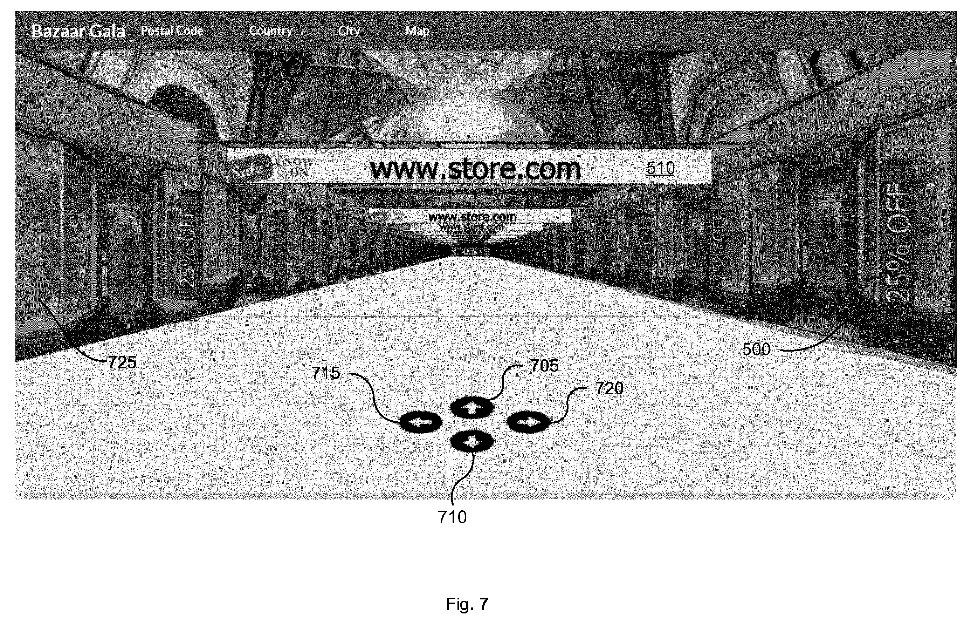

In response to receiving the location selection, the method can further comprise at bazaar generation engine 210 generating a respective virtual representation for each physical shop in the selection of the physical shops, each virtual representation based on the corresponding information package 110. These virtual representations can comprise one or more of the shop name, the shop image, and the shop address, and can comprise representations that are 2D, 3D, or a combination of 2D and 3D. These virtual representations can be generated by bazaar generation engine 210 graphically and/or visually representing, rendering, and/or combining the information within each information package 110. These virtual representations can be generated as dynamic HTML & ASP.NET pages 250. In some implementations, these virtual representations can resemble stores A-E shown in Fig. 4. Figs. 7-11, discussed in greater detail below, show other examples of virtual representations/storefronts.

In response to receiving the location selection, the method can further comprise at bazaar generation engine 210 arranging the virtual representations to generate the virtual bazaar, the virtual representations arranged so that the virtual representations of the physical shops providing each given offering are grouped in a respective portion of the virtual bazaar. In some implementations, the arranging can comprise positioning adjacent to one another at least some of the virtual representations of the physical shops providing each given offering. In this manner, different portions of the virtual bazaar can be predominantly or entirely populated by virtual representations of stores offering a given offering. For example, a lane of the virtual bazaar can be populated predominantly or entirely by virtual representations of shoe stores.

The virtual bazaar can be generated as one or more dynamic HTML & ASP.NET pages 250. It is also contemplated that the steps of generating the virtual representations and arranging them to generate the bazaar can be performed in a single step.

A device for creating such a virtual bazaar is also contemplated. This device can comprise bazaar generation engine 210, which can in turn comprise a processor in communication with a network interface. The processor can comprise one or more CPUs and/or GPUs. The processor can be located within web server 230. The device can also comprise shop information database 100 in communication with the processor. The processor, in turn, can be configured to create the virtual bazaar by carrying out the method steps described above.

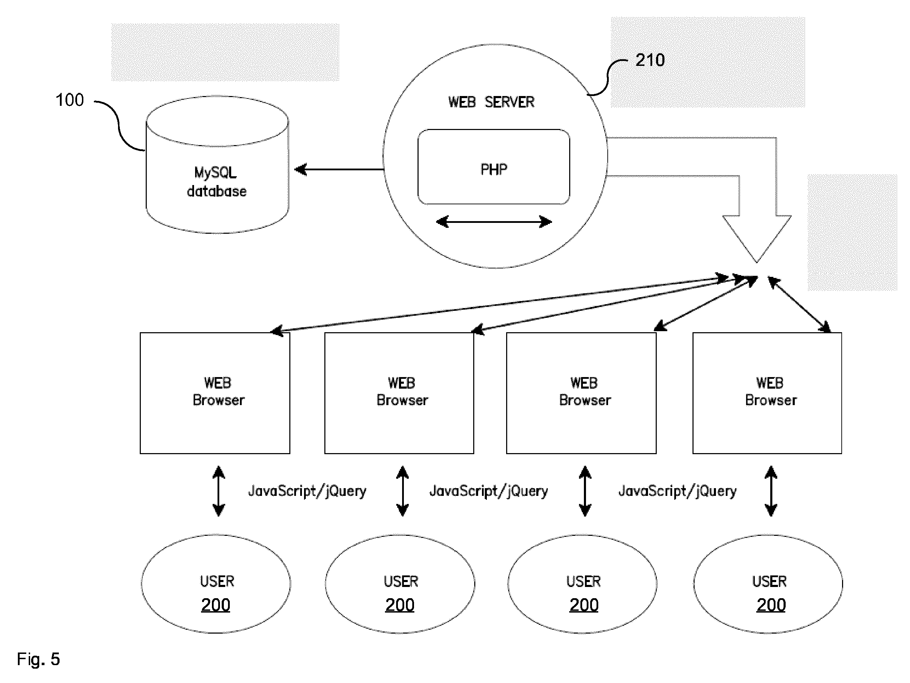

Fig. 5 shows another schematic of a system that can be used to generate the virtual bazaar. Database 100 can comprise a MySQL database. The data making up information package 110 can be stored in database 100 in any suitable format including as plain text (e.g. for store hours) and images (e.g. for storefront photos). Bazaar generation engine 210 can comprise a web server, which uses PHP as the server side language. PHP can be the language used to deliver to end users the data stored in database 100.

Users 200 can use web browsers on their devices to request data from bazaar generation engine 210, i.e. to access the virtual bazaar. These requests can be made using JavaScript/j Query. JavaScript and jQuery can be used as the client/user side languages used to allow interaction between the user and the virtual bazaar. These languages can record user input (e.g. mouse clicks or touch input) and then load the proper PHP file, which in turn loads the proper information to allow the user to view and interact with the virtual bazaar. HTML/CSS can be used to deliver the information from bazaar generation engine 210 to the web browsers on devices of users 200.

This system can allow users to send requests for information to bazaar generation engine 210 and access and interact with the virtual bazaar using their web browsers and without the need for the users to download any specialized software. Moreover, since web browsers are commonly found on most personal computer and mobile devices such as smartphones, most users will be able to access and browse the virtual bazaar using the devices they already own.

Fig. 6 shows an exemplary landing web page for allowing access to the virtual bazaar. The header 605 allows a user to generate and/or access a virtual bazaar by country, city, and/or postal code. Header 605 also includes drop down menu 610 allowing a user to choose to enter different lanes of the virtual bazaar where virtual representations of stores offering a given type of product or service have been grouped/aggregated together. For example, the user can choose from the sports lane, glasses lane, carpet lane, and electronics lane. Other product- and/or service-specific lanes are also contemplated, where virtual stores are grouped based on products and/or services other than the ones listed herein.

The landing page shown in Fig. 6 also provides a 2D map 615 of the virtual bazaar where different lanes of the bazaar are labeled with the type of product or service offered by the stores represented in that lane. A user can click or touch on a particular lane to enter that lane and browse the virtual storefronts.

The shape of map 615 can reflect the shape/geometry of the virtual bazaar. In other implementations, the geometry of map 615 can reflect the map of the actual, physical streets in the target area. In yet other implementations, the geometry of map 615 can reflect the map of a famous physical bazaar or the map of a well-known physical city or location.

Fig. 7 shows an exemplary lane in an exemplary virtual bazaar. The lane comprises virtual store fronts 725, and advertising banners 500 and 510. Directional arrows 705, 710, 715, and 720 allow a user to move through the lane and browse different virtual storefronts. Activating arrow 705 (e.g. by clicking or touching it) can allow the perspective (i.e. point of view) of a user to move forward, i.e. further along the lane. In other words, the bazaar generation engine is configured to receive input indicating that arrow 705 has been activated, and in response, regenerate the graphical representation of the virtual bazaar that corresponds to a user's perspective had the user moved further ahead along the lane. Activating arrow 710 can allow the perspective of the user to backtrack along the lane. In other words, the bazaar generation engine is configured to receive input indicating that arrow 710 has been activated, and in response, regenerate the graphical representation of the virtual bazaar that corresponds to a user's perspective had the user backtracked along the lane.

Activating arrows 715 and/or 720 can allow the perspective of the user to turn sideways towards the virtual storefronts such as storefront 725. In other words, the bazaar generation engine is configured to receive input indicating that arrows 715 and/or 720 has been activated, and in response, regenerate the graphical representation of the virtual bazaar that corresponds to a user's perspective had the user turned sideways towards the virtual storefronts such as storefront 725.

Fig. 8 shows the perspective of the user when arrow 715 is used to turn the perspective towards storefront 725. When the perspective is turned in this way, the bazaar generation engine can be configured to generate arrow 805 and presented to the user. Activating arrow 805 can allow the perspective of the user to revert (i.e. for the bazaar generation engine to revert the perspective) to its original orientation where it points along the lane, i.e. the perspective shown in Fig. 7.

In either one of the perspectives shown in Figs. 7 and 8, clicking or touching directly on a given virtual storefront can cause the bazaar generation engine to present to the user a perspective that faces the storefront, as shown in Fig. 9. This perspective can allow a user to clearly see the details of a storefront, including any information or advertising on the storefront (e.g. "antiques" or "open" sign in Fig. 9) and also potentially a visual representation of the store's offering (e.g. antiques such as a model ship in the case of Fig. 9). In this view, the bazaar generation engine can present an arrow 905 on or near the virtual storefront. Activating arrow 905 can cause bazaar generation engine to revert the perspective presented to the user to those shown in Fig. 7 (along the lane) or Fig. 8 (turned towards the storefronts).

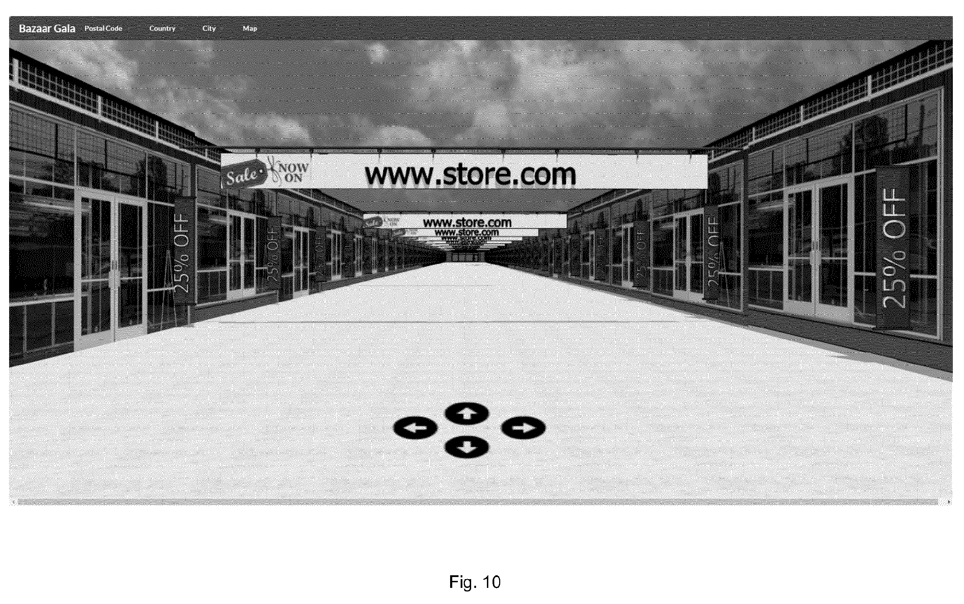

Fig. 10 shows yet another storefront scheme or template for presenting virtual storefronts to form lanes of the virtual bazaar. In addition, the lanes shown in Fig. 10 are represented as being open air. In such open air implementations, the bazaar generation engine can adjust the appearance of the sky (e.g. brightness, color, sunny or overcast) based on a variety of factors, including but not limited to: the time of day and/or weather conditions at the location of the user, or the time of day and/or whether conditions at the user's location selection or at the target area. For example, for a user whose IP address indicates that she is in Toronto and the user's location selection and/or the target area are in London, the bazaar generation engine can adjust the sky to be sunny and bright based on the user's IP address being in Toronto. Alternatively, the bazaar generation engine can adjust the sky to be darker and overcast based on the target location being in London.

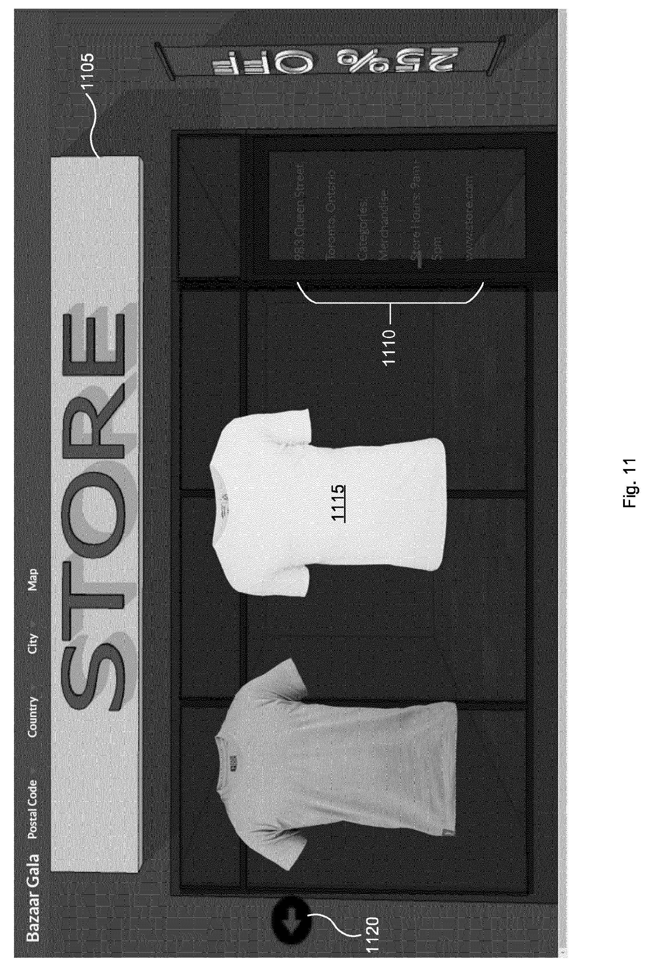

Fig. 11 shows another example of a virtual storefront generated by the bazaar generation engine where the storefront comprises the store sign or name 1105, store contact and operating information 1110, and a visual representation 1115 of goods and/or services offered by the store. The bazaar generation engine can also generate and display arrow 1120 on or near the virtual storefront. Activating arrow 1120 can cause bazaar generation engine to revert the perspective back to one or more of the perspectives shown in Fig. 7 (along the lane) or Fig. 8 (turned towards the storefronts).

In some implementations, the bazaar generation engine is configured to generate each virtual storefront using the same template having fillable fields for adding store information such as store name, store contact and operating information, a photo of the store's display window and/or representations of a selection of the offerings of the store. In such an implementation, all the virtual storefronts can have a similar general appearance while details (i.e. fillable fields) of each storefront can be different based on the information package collected and saved in the database in association with each store.

In some implementations, the bazaar generation engine can be configured to generate each storefront using a photograph of the corresponding physical store. In such implementations, the storefronts will appear different from one another. Optionally, in such implementations, the bazaar generation engine can comprise an image recognition engine configured to recognize features in the photograph of the store such as the display window, the store name, and the door. By distinguishing these features, the bazaar generation engine can extract different information from the photograph such as the store name and the types of products shown in the store's display window. Such information can then be saved in database 100. In addition, the bazaar generation engine can use the image recognition engine to ensure that in the virtual storefront store information (e.g. information 1110 shown in Fig. 11) is not displayed on a portion of the photograph that would interfere with other information or features, e.g. by covering the display window or the store sign/name.

In some implementations, the bazaar generation engine can assign a proximity score to the virtual representation of each store, and then arrange the virtual representations based on their proximity scores to form the lanes of the virtual bazaar. For example, virtual stores with higher proximity scores can be positioned closer to the beginning or start of a lane of the bazaar. The proximity score can be calculated based on any suitable factor or factors. For example, the bazaar generation engine can calculate the proximity score based on the distance of the physical store to the user as determined, for example, from the user's IP address and/or GPS location.

In another implementation, the bazaar generation engine can store a list of given products and/or services that relate to a type and/or a category of products and/or services. The bazaar generation engine can use this list to determine how many of the actual products and/or services offered by a given store fall into a particular category/type of products and/or services requested by a user. The stores that have more products and/or services that are relevant and/or related to a type of product or service requested by a user will receive a higher proximity score. Colloquially, this can be termed a relevance ranking. In another implementation, the bazaar generation engine can use user/customer reviews to assign proximity scores to different stores. In another implementation, the bazaar generation engine can determine the proximity score by the number of a user's friends and/or contacts on social media that are favorable towards each store.

In some implementations, the bazaar generation engine can be configured to track activity of a user in the virtual bazaar including, but not limited to: which virtual storefronts a user turns towards or selects to view, how much time a user spends in a lane or facing a given storefront, and the order in which a user browses different lanes. In some implementations, the bazaar generation engine can maintain a co-buying dataset comprising information about types of products and services that are often purchased together. The bazaar generation engine can use information such a user's past behavior in the virtual bazaar and the co-buying dataset to determine and arrange the position and distribution of different lanes in the virtual bazaar.

The many features and advantages of the invention are apparent from the detailed specification and, thus, it is intended by the appended claims to cover all such features and advantages of the invention that fall within the true spirit and scope of the invention. Further, since numerous modifications and changes will readily occur to those skilled in the art, it is not desired to limit the invention to the exact construction and operation illustrated and described, and accordingly all suitable modifications and equivalents may be resorted to, falling within the scope of the invention.

## Claims

1. A method of creating a virtual bazaar, the method comprising:
receiving at a bazaar generation engine information packages each corresponding to one of a plurality of physical shops dispersed within a given geographical area;
communicating the information packages from the bazaar generation engine to a shop information database;
storing the information packages in the shop information database;
receiving at the bazaar generation engine a location selection of a location; and
in response to receiving the location selection, at the bazaar generation engine:
retrieving from the shop information database the information packages corresponding to a selection of the physical shops located within a target area related to the location selection, the target area within the given geographical area;
generating a respective virtual representation for each physical shop in the selection of the physical shops, each virtual representation based on the corresponding information package;and
arranging the virtual representations to generate the virtual bazaar, the virtual representations arranged so that the virtual representations of the physical shops providing each given offering are grouped in a respective portion of the virtual bazaar.

2. The method of claim 1, wherein each of the information packages comprises:
a shop name;
a shop image;
a shop address; and
a shop offering
associated with a respective one of the plurality of physical shops.

3. The method of claim 2, wherein
the shop image comprises a photograph of a shop window of the respective one of the plurality of physical shops; and/or
at least some of the information packages further comprise one or more of:
a shop telephone number;
a shop web site address;
a shop operating hours; and
a shop promotional offer information;
associated with the respective one of the plurality of physical shops.

4. The method of any one of claims 2 to 3, wherein the virtual representation comprises the shop name, the shop image, and the shop address.

5. The method of claim 4, wherein one or more of the respective virtual representations further comprise a respective e-commerce link to allow purchasing the offering provided by the corresponding physical shop.

6. The method of claim 1, wherein
the location comprises one of:
an address;
a street intersection;
a landmark;
a postal code;
a zip code;
a region;
a city;
a country;
coordinates of a nearest cellular tower;
coordinates of a nearest wireless access point; and
latitude and longitude coordinates; and/or
the arranging comprises positioning adjacent to one another at least some of the virtual representations of the physical shops providing each given offering.

7. The method of claim 1, wherein
at least one of the virtual representations is three-dimensional; and/or
the virtual bazaar comprises at least one three-dimensional portion; and/or
at least one portion of the virtual bazaar comprises a virtual lane.

8. The method of claim 1, wherein
each given offering comprises one or more of:
one or more product types;
one or more service types;
one or more given products; and
one or more given services; and/or
one or more of the respective virtual representations are configured to allow virtual browsing of the offering provided by the corresponding physical shop.

9. The method of claim 1, further comprising
receiving at the bazaar generation engine an offering selection of a target offering; and
wherein the selection of the physical shops is further limited to the physical shops providing the target offering.

10. The method of claim 1, wherein the virtual bazaar further comprises at least one visual banner.

11. The method of claim 10, wherein the at least one visual banner is static.

12. The method of claim 10, wherein the at least one visual banner is dynamic.

13. The method of claim 1, further comprising the bazaar generation engine adding a music sound track to at least one portion of the virtual bazaar, the music sound track corresponding to the given offering corresponding to the at least one portion of the virtual bazaar.

14. The method of claim 1, further comprising the bazaar generation engine adding a lighting effect to the virtual bazaar based on a time of day at the target area when the virtual bazaar is generated.

15. A device for creating a virtual bazaar, the device comprising:
a bazaar generation engine comprising a processor in communication with a network interface; and
a shop information database in communication with the processor;
the processor configured to:
receive information packages each corresponding to one of a plurality of physical shops dispersed within a given geographical area;
communicate the information packages to the shop information database to store the information packages;
receive a location selection of a location; and
in response to receiving the location selection:
retrieve from the shop information database the information packages corresponding to a selection of the physical shops located within a target area related to the location selection, the target area within the given geographical area;
generate a respective virtual representation for each physical shop in the selection of the physical shops, each virtual representation based on the corresponding information package; and
arrange the virtual representations to generate the virtual bazaar, the virtual representations arranged so that the virtual representations of the physical shops providing each given offering are grouped in a respective portion of the virtual bazaar.
